# FASCICULE DE BREVET EUROPEEN

(11) **EP 4 324 076 B1**
(45) Date de publication et mention de la délivrance du brevet: **22.01.2025**
(21) Numéro de dépôt: 22720476.5
(22) Date de dépôt: 07.04.2022
(51) Int. Cl.: H02K 5/20, H02K 5/15

(54) **MOTEUR ÉLECTRIQUE AGENCÉ POUR PERMETTRE UNE MEILLEURE ÉVACUATION DE LA CHALEUR GÉNÉRÉE LORS DE SON FONCTIONNEMENT**
ELEKTROMOTOR, EINGERICHTET ZUR BESSEREN ABLEITUNG DER BEIM BETRIEB ERZEUGTEN WÄRME
ELECTRIC MOTOR DESIGNED TO ALLOW A BETTER REMOVAL OF THE HEAT GENERATED WHEN IT IS OPERATING

(30) Priorité: 15.04.2021 FR 2103896
(43) Date de publication de la demande: 21.02.2024
(73) Titulaire: NOVARES France, 78140 Vélizy-Villacoublay (FR)
(72) Inventeur: LEDIEU, Cédric, 62144 MONT SAINT ELOI (FR); BALLIGAND, Maxime, 62440 HARNES (FR)
(74) Mandataire: Germain Maureau
(86) Numéro de dépôt international: PCT/FR2022/050652
(87) Numéro de publication internationale: WO 2022/219269

(56) Documents cités:
- WO-A1-2021/104970
- CN-A- 104 685 769
- CN-A- 111 756 133
- CN-U- 212 412 862
- DE-A1- 102014 117 382
- DE-A1- 102016 110 658
- US-A1- 2019 386 537
- US-A1- 2020 373 814
- US-B2- 8 653 704

## Description

L'invention concerne un moteur électrique agencé pour permettre une meilleure évacuation de la chaleur générée lors de son fonctionnement.

De manière générale, les moteurs électriques actuels comportent un rotor solidaire d'un arbre et un stator qui entoure le rotor. Le stator est monté dans un carter qui comporte des roulements pour le montage en rotation de l'arbre. Le rotor comporte un corps formé par un empilage de tôles ou roues polaires (claw pole) maintenues sous forme de paquet au moyen d'un système de fixation adapté. Le corps du rotor comporte des cavités internes logeant des aimants permanents. Le stator comporte un corps constitué par un empilage de tôles formant une couronne, dont la face intérieure est pourvue de dents délimitant deux à deux une pluralité d'encoches ouvertes vers l'intérieur du corps de stator et destinées à recevoir des enroulements de phase. Ces enroulements de phase traversent les encoches du corps de stator et forment des chignons faisant saillie de part et d'autre du corps de stator. Les enroulements de phase peuvent par exemple être constitués d'une pluralité de segments de conducteur en forme de U, les extrémités libres de deux segments adjacents étant reliées entre elles par soudage.

Dans le rotor, le paquet de tôles est enserré axialement entre un flasque avant et un flasque arrière montés coaxialement à l'arbre. Chaque flasque a globalement la forme d'un disque s'étendant dans un plan radial perpendiculaire à l'axe de l'arbre. Chaque flasque comporte un orifice central pour le montage coaxial sur l'arbre et plusieurs trous traversants destinés à recevoir des vis de fixation traversant axialement l'ensemble du paquet de tôles, lesdites vis étant solidarisées aux flasques au moyen d'écrous. Les flasques avant et arrière sont généralement formés d'un matériau amagnétique, conducteur de chaleur, par exemple un métal.

Le carter comporte généralement des paliers avant et arrière assemblés ensemble. Les paliers définissent une cavité interne dans laquelle sont logés le rotor et le stator. Chacun des paliers porte centralement un roulement à billes pour le montage en rotation de l'arbre du rotor.

Lors du fonctionnement du moteur, le courant circulant à travers les enroulements de phase du stator génère une chaleur importante qui doit être évacuée. Pour refroidir le stator, il existe actuellement plusieurs solutions. L'une de ces solutions consiste à prévoir un circuit de refroidissement à l'intérieur du palier avec lequel est fretté le stator, un liquide de refroidissement circulant à l'intérieur du circuit de refroidissement permettant d'évacuer la chaleur générée par le stator via le palier. Cette solution présente toutefois l'inconvénient de ne permettre un refroidissement du stator qu'au niveau des surfaces du paquet de tôles qui est en contact avec le palier refroidi. Cette solution ne permet donc pas un refroidissement optimal du moteur. Une autre solution existante consiste à faire circuler de l'huile à travers l'arbre du rotor et à faire circuler ensuite cette huile le long du corps de stator de telle sorte qu'elle soit en contact avec les chignons des enroulements de phase. Une telle solution nécessite toutefois de prévoir de nombreuses modifications au niveau de la structure du moteur, ce qui la rend difficile à mettre en œuvre, et, donc, relativement couteuse. D'autres solutions ont par ailleurs été décrites dans les documents CN 212 412 862 U et US 2019/386537.

L'invention vise donc à proposer un moteur électrique agencé pour permettre une meilleure évacuation de la chaleur générée lors de son fonctionnement et ne présentant pas les inconvénients des solutions existantes décrites précédemment.

A cet effet, l'invention concerne un moteur électrique comprenant un rotor monté sur un arbre, un stator disposé autour du rotor, ledit stator comprenant un corps formé par un paquet de tôles et des chignons faisant saillie axialement de part et d'autre du corps de stator, un palier avant et un palier arrière reliés entre eux, lesdits paliers avant et arrière formant une cavité interne dans laquelle sont logés le rotor et le stator, dans lequel le palier arrière est en forme de cloche et recouvre une partie annulaire du palier avant s'étendant axialement depuis une paroi d'extrémité dudit palier avant, le palier arrière formant avec le palier avant un canal interne de circulation d'un premier fluide de refroidissement à l'intérieur duquel circule un premier fluide de refroidissement, ledit premier fluide de refroidissement pénétrant à l'intérieur du canal interne par l'intermédiaire d'un premier canal d'entrée de fluide formé radialement à travers le palier arrière et sortant du canal interne par l'intermédiaire d'un premier canal de sortie de fluide formé radialement à travers le palier arrière, caractérisé par le fait que le palier avant présente une nervure saillante s'étendant radialement en direction d'une face interne du palier arrière, ladite nervure formant un séparateur pour le canal interne, lesdits premiers canaux d'entrée et de sortie de fluide débouchant respectivement de part et d'autre de ladite nervure, et par le fait que le moteur électrique est refroidi par ailleurs par un deuxième fluide de refroidissement circulant dans le paquet de tôles du stator et sur les chignons du stator, ledit deuxième fluide de refroidissement étant alimenté par l'intermédiaire d'au moins un deuxième canal d'entrée de fluide, ledit au moins un deuxième canal d'entrée de fluide étant au moins partiellement formé à travers la nervure du palier avant.

Ainsi configuré, le moteur électrique pourra être refroidi à la fois par un premier fluide de refroidissement circulant entre les paliers avant et arrière et par un deuxième fluide de refroidissement circulant à l'intérieur du paquet de tôles de manière à être en contact avec le stator, et notamment avec les chignons des enroulements de phase du stator. Une meilleure évacuation de la chaleur générée par le moteur lors de son fonctionnement peut ainsi être obtenue. Ce double circuit de refroidissement est réalisable du fait de la présence d'un séparateur au niveau du palier avant, qui permet, d'une part, de séparer les canaux d'entrée et de sortie du premier fluide de refroidissement, et, d'autre part, de fournir une surépaisseur à la périphérie externe du palier avant suffisamment importante pour permettre la formation du canal d'entrée du deuxième fluide de refroidissement. Ce séparateur évite donc que le canal interne de circulation de fluide soit interrompu à un ou plusieurs endroits pour permettre le passage du canal d'entrée du deuxième fluide de refroidissement. Une telle solution présenterait en effet l'inconvénient de nécessiter l'ajout de moyens d'étanchéité additionnels de manière à éviter les infiltrations du deuxième fluide de refroidissement dans le circuit du premier fluide de refroidissement et réciproquement.

Selon d'autres caractéristiques, le moteur de l'invention comporte une ou plusieurs des caractéristiques optionnelles suivantes considérées seules ou en combinaison :
- le deuxième fluide de refroidissement sort de la cavité interne par l'intermédiaire d'au moins un deuxième canal de sortie de fluide, ledit au moins un deuxième canal de sortie de fluide étant au moins partiellement formé par une rainure axiale s'étendant le long d'une face interne du palier avant jouxtant le stator, ladite rainure axiale communiquant fluidiquement avec un orifice de sortie formé à travers le palier arrière.
- l'orifice de sortie est formé axialement à travers une paroi d'extrémité du palier arrière.
- ledit au moins un deuxième canal d'entrée de fluide est en communication fluidique avec au moins un canal de circulation de fluide formé à l'intérieur du stator, ledit au moins un canal de circulation de fluide débouchant à l'une de ses extrémités dans un espace intermédiaire avant séparant axialement la paroi d'extrémité du palier avant du stator et à une autre de ses extrémités dans un espace intermédiaire arrière séparant axialement une paroi d'extrémité du palier arrière du stator.
- le palier arrière est équipé d'une tubulure d'entrée de fluide communiquant avec le premier canal d'entrée de fluide et d'une tubulure de sortie de fluide communiquant avec le premier canal de sortie de fluide.
- le palier avant est équipé d'au moins une tubulure d'entrée de fluide communiquant avec ledit au moins un deuxième canal d'entrée de fluide.
- des joints d'étanchéité annulaires sont logés au moins partiellement à l'intérieur de rainures annulaires formées à la périphérie externe de la partie cylindrique du palier avant, de part et d'autre du canal interne de circulation de fluide.
- le premier fluide de refroidissement est choisi parmi l'air, l'eau glycolée ou une huile.
- le deuxième fluide de refroidissement est choisi parmi l'air ou une huile.

L'invention sera davantage comprise à la lecture de la description non limitative qui va suivre, faite en référence aux figures ci-annexées.
[Fig. 1] est une vue en perspective d'un moteur électrique selon un mode particulier de réalisation de l'invention,
[Fig. 2] est une vue de face du moteur de la figure 1,
[Fig. 3] est une vue arrière du moteur de la figure 1,
[Fig.4] est une vue en perspective avant du palier avant équipant le moteur de la figure 1,
[Fig. 5] est une vue en perspective arrière du palier représenté sur la figure 4,
[Fig. 6] est une vue similaire à la figure 5, le palier avant ayant été partiellement tronqué sur sa partie arrière,
[Fig. 7] est une vue arrière du palier représenté sur la figure 6,
[Fig. 8] est une vue en coupe du moteur de la figure 1 selon la ligne de coupe AA',
[Fig. 9] est une vue en coupe du moteur de la figure 1 selon la ligne de coupe BB'.

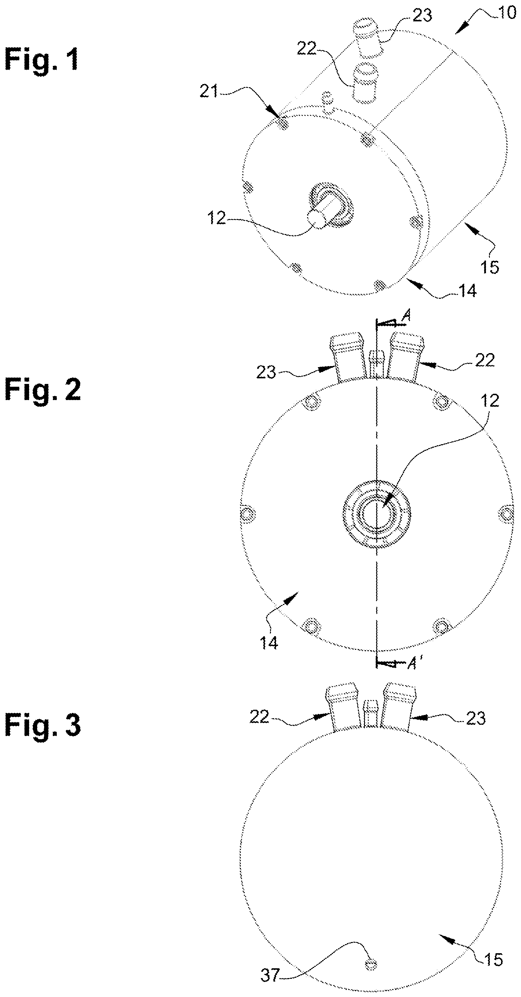

Les figures 1 à 3 représentent un moteur électrique 10 selon l'invention comprenant deux paliers, respectivement un palier avant 14 et un palier arrière 15, reliés ensemble, notamment au moyen de vis 21, le palier arrière 15 logeant et recouvrant presque intégralement le palier avant 14.

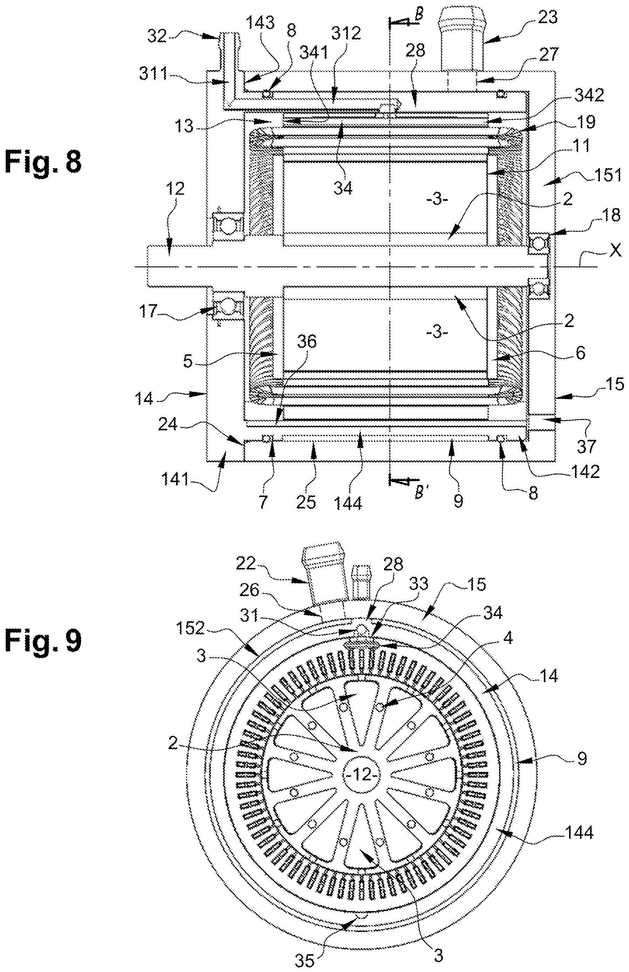

Comme illustré sur les figures 8 et 9, le palier avant 14 comprend un carter dans lequel sont logés un rotor 11 solidaire en rotation d'un arbre 12 et un stator 13 annulaire qui entoure le rotor 11 de manière coaxiale à l'arbre 12. Le stator 13 sera avantageusement fretté à l'intérieur du palier avant 14. Les paliers 14, 15 sont creux et forment une cavité interne dans laquelle sont logés le rotor 11 et le stator 13. Chacun des paliers 14, 15 porte centralement un roulement à billes, respectivement 17 et 18, pour le montage en rotation de l'arbre 12. Des chignons 19 font saillie axialement de part et d'autre du corps de stator 13 et sont logés dans l'espace intermédiaire séparant le stator 13 des paliers respectifs 14, 15. Les paliers avant et arrière 14, 15 seront avantageusement constitués de métal. Dans une configuration avantageuse de l'invention, le palier avant 14 sera en aluminium, tandis que le palier arrière 15 sera constitué par une bague en acier vissée sur le palier avant 14 et logeant un roulement arrière de l'arbre 12 du rotor, le palier arrière 15 et une partie du palier avant 14 étant recouvert par un couvercle constitué d'un matériau à faible conductivité thermique, comme une matière plastique par exemple.

Dans le mode de réalisation représenté, le rotor 11 comprend un corps formé par un paquet de tôles 2 réalisé dans un matériau ferromagnétique, notamment en acier, ainsi qu'une pluralité d'aimants permanents 3 destinés à être logés dans une pluralité de cavités internes formées à l'intérieur du paquet de tôles 2, chaque cavité interne logeant un aimant permanent 3. Le paquet de tôles 2 est monté coaxialement sur l'arbre 12 monté rotatif autour d'un axe X. L'arbre 12 pourra être emmanché en force à l'intérieur d'une ouverture centrale du paquet de tôles 2 de manière à lier en rotation le corps du rotor avec l'arbre 12.

Le paquet de tôles 2 est formé d'un empilement axial de tôles qui s'étendent dans un plan radial perpendiculaire à l'axe X de l'arbre 12. Une pluralité de trous de fixation 4 sont réalisés dans le paquet de tôles 2 pour permettre le passage de vis de fixation des tôles du paquet. Ces trous de fixation 4 sont traversants de sorte qu'il est possible de faire passer à l'intérieur de chaque trou 4 une vis. Une première extrémité des vis est en appui contre la face externe d'un flasque d'extrémité avant 5, tandis que l'autre extrémité des vis coopère avec un écrou en appui contre la face externe d'un flasque d'extrémité arrière 6. Ainsi, le paquet de tôles 2 est enserré axialement entre le flasque d'extrémité avant 5 et le flasque d'extrémité arrière 6. Ces flasques 5, 6 permettent d'assurer un équilibrage du rotor 11 tout en permettant un bon maintien des aimants 3 à l'intérieur de leur cavité respective. L'équilibrage peut être effectué par ajout ou retrait de matière. Le retrait de matière peut être effectué par usinage, tandis que l'ajout de matière peut être effectué en implantant des éléments dans des ouvertures prévues à cet effet et réparties suivant la circonférence des flasques 5, 6.

Le palier arrière 15 consiste en un couvercle en forme de cloche qui, dans la position montée du moteur représentée sur la figure 1, recouvre une partie cylindrique 142 du palier avant 14 qui s'étend axialement depuis une paroi d'extrémité 141 dudit palier avant 14, ladite paroi 141 possédant la forme d'un disque aligné dans un plan perpendiculaire à l'axe X de l'arbre 12. Le palier arrière 15 repose au niveau d'un bord d'extrémité 24 sur un épaulement 143 défini par la paroi d'extrémité 141.

Le palier arrière 15 possède une forme sensiblement complémentaire à celle de la partie cylindrique 142 du palier avant 14 de sorte que, dans la position montée du moteur, cette partie 142 est en contact étanche avec la paroi interne 25 du palier arrière 15, l'étanchéité étant assurée par deux joints d'étanchéité 8 de forme annulaire qui sont logés à l'intérieur de deux rainures annulaires 7 formées à la périphérie de la partie 142. Les rainures 7 sont disposées de part et d'autre d'une zone annulaire 144 de plus faible épaisseur de la partie 142. La zone annulaire 144 forme avec la paroi interne 25 du palier arrière 15 un canal interne 9 de circulation d'un premier fluide, ledit canal 9 possédant une forme sensiblement cylindrique dont l'axe est parallèle à l'axe X défini par l'arbre 12 du rotor 11. Le canal 9 permet ainsi la circulation d'un premier fluide de refroidissement, comme par exemple de l'eau glycolée, autour de la partie cylindrique 142 du palier avant 14. Ainsi, lors du fonctionnement du moteur 1, la chaleur dégagée par le stator 13 et transmise au palier avant 14 pourra être directement transférée au premier fluide de refroidissement circulant dans le canal interne 9. Un refroidissement plus rapide du stator 13 pourra ainsi être obtenu. Le transfert de chaleur vers le premier fluide de refroidissement est encore amélioré dans le cas où le palier avant 14 est constitué d'un matériau possédant une conductivité thermique élevée, comme l'aluminium par exemple, et le palier arrière 15 est constitué d'une bague en acier vissée sur le palier avant 14 et logeant un roulement arrière de l'arbre 12 du rotor, le palier arrière 15 et une partie du palier avant 14 étant recouvert par un couvercle constitué d'un matériau à faible conductivité thermique, comme une matière plastique par exemple. Le premier fluide de refroidissement pénètre à l'intérieur du canal interne 9 par l'intermédiaire d'un canal d'entrée 26 du premier fluide formé radialement à travers le palier arrière 15 et débouchant dans le canal interne 9. Ce premier fluide de refroidissement sort du canal interne 9 par l'intermédiaire d'un canal de sortie 27 du premier fluide formé radialement à travers le palier arrière 15 et débouchant également dans le canal interne 9. L'alimentation en premier fluide de refroidissement se fera au travers d'une première tubulure d'entrée de fluide 22 disposée à la périphérie externe du palier arrière 15, ladite première tubulure d'entrée 22 communiquant avec le canal d'entrée 26 du premier fluide et la sortie du premier fluide de refroidissement se fera au travers d'une tubulure de sortie de fluide 23 disposée à la périphérie externe du palier arrière 15, ladite tubulure de sortie 23 communiquant avec le canal de sortie 27 du premier fluide.

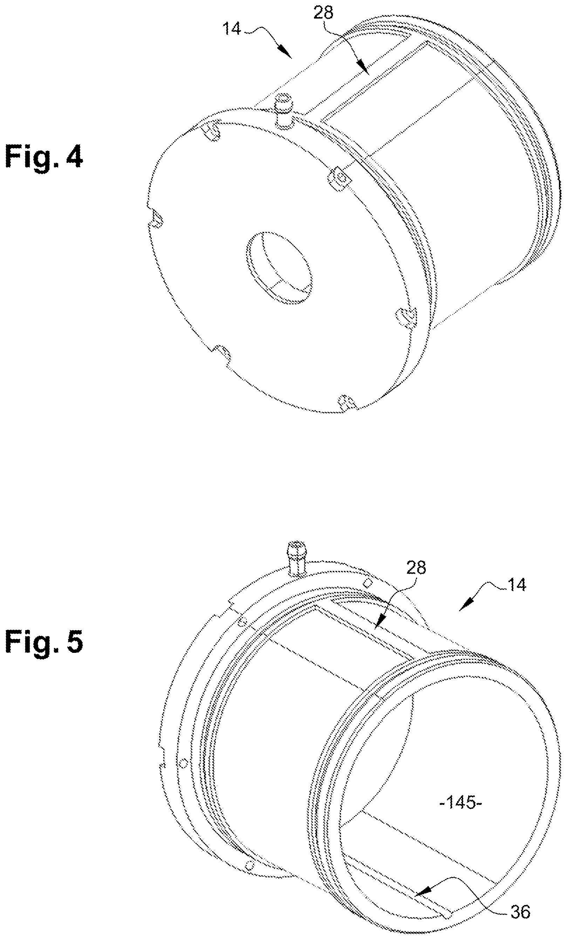

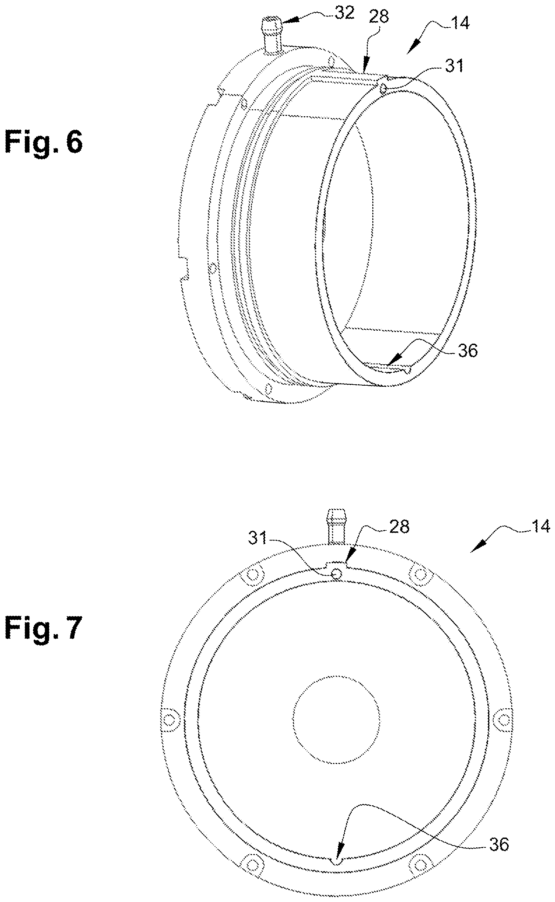

Comme illustré sur les figures 4, 5 et 8, 9, le palier avant 14 est muni d'une nervure saillante 28 s'étendant radialement en direction d'une face interne 152 du palier arrière 15, ladite nervure 28 formant un séparateur pour le canal interne 9, lesdits canaux d'entrée et de sortie 26, 27 du premier fluide débouchant respectivement de part et d'autre de ladite nervure 28. Cette nervure 28 crée donc une surépaisseur dans la partie cylindrique 142 du palier avant 14. Comme représenté sur les figures 6 et 7, cette surépaisseur est suffisante pour permettre le passage d'un deuxième canal d'entrée de fluide 31 à travers le palier avant 14. Ce deuxième canal d'entrée de fluide 31 possède une première section 311 orientée radialement et une deuxième section 312 orientée axialement. La première section 311 débouche à la périphérie externe de la paroi d'extrémité 141 du palier avant 14 au niveau d'une deuxième tubulure d'entrée de fluide 32. La deuxième section 312 communique avec un trou traversant 33 formé radialement à travers le paquet de tôles 2 du stator 13, ledit trou traversant 33 débouchant dans un canal de circulation de fluide 34 formé axialement à l'intérieur du stator 13. Ce canal de circulation de fluide 34 débouche à l'une de ses extrémités 341 dans un espace intermédiaire avant séparant axialement la paroi d'extrémité 141 du palier avant 14 du stator 14 et à une autre extrémité 342 dans un espace intermédiaire arrière séparant axialement une paroi d'extrémité 151 du palier arrière 15 du stator 13. Ainsi, un deuxième fluide de refroidissement, comme de l'huile ou de l'air, peut circuler à l'intérieur du moteur électrique 10 en complément du circuit de refroidissement au moyen du premier fluide de refroidissement. Ce deuxième fluide de refroidissement pourra ainsi être alimenté via la deuxième tubulure d'entrée 32 et circulera successivement dans le deuxième canal d'entrée de fluide 31, puis dans le canal de circulation de fluide 34, pour finalement circuler le long du stator 13, en étant notamment en contact avec les chignons 19. Un refroidissement amélioré sera ainsi possible comparativement à un moteur uniquement parcouru sur sa périphérie par un seul fluide de refroidissement.

Une fois réchauffé au contact du stator 13, le deuxième fluide de refroidissement circule le long d'un deuxième canal de sortie de fluide 35 s'étendant le long de la périphérie externe du stator 13. Ce deuxième canal de sortie de fluide 35 est au moins partiellement formé par une rainure 36 s'étendant axialement le long d'une face interne 145 du palier avant 14 jouxtant le stator 13. Cette rainure 36 communique avec un orifice de sortie 37 formé à travers la paroi d'extrémité 151 du palier arrière 15. Le deuxième fluide de refroidissement peut donc sortir du moteur électrique 10 via cet orifice de sortie 37.

L'invention n'est évidemment pas limitée à la configuration de l'invention telle que décrite précédemment.

## Revendications

1. Moteur électrique (10) comprenant un rotor (11) monté sur un arbre (12), un stator (13) disposé autour du rotor (11), ledit stator (13) comprenant un corps formé par un paquet de tôles (2) et des chignons (19) faisant saillie axialement de part et d'autre du corps de stator, un palier avant (14) et un palier arrière (15) reliés entre eux, lesdits paliers avant et arrière (14, 15) formant une cavité interne dans laquelle sont logés le rotor (11) et le stator (13), dans lequel le palier arrière (15) est en forme de cloche et recouvre une partie cylindrique (142) du palier avant (14) s'étendant axialement depuis une paroi d'extrémité (141) dudit palier avant (14), le palier arrière (15) formant avec le palier avant (14) un canal interne (9) de circulation d'un premier fluide de refroidissement à l'intérieur duquel circule un premier fluide de refroidissement, ledit premier fluide de refroidissement pénétrant à l'intérieur du canal interne (9) par l'intermédiaire d'un premier canal d'entrée de fluide (26) formé radialement à travers le palier arrière (15) et sortant du canal interne (9) par l'intermédiaire d'un premier canal de sortie de fluide (27) formé radialement à travers le palier arrière (15), **caractérisé en ce que** le palier avant (14) présente une nervure saillante (28) s'étendant radialement en direction d'une face interne (152) du palier arrière (15), ladite nervure (28) formant un séparateur pour le canal interne (9), lesdits premiers canaux d'entrée et de sortie de fluide (26, 27) débouchant respectivement de part et d'autre de ladite nervure (28), et **en ce que** le moteur électrique (10) est refroidi par ailleurs par un deuxième fluide de refroidissement circulant dans le paquet de tôles (2) du stator (13) et sur les chignons (19) du stator (13), ledit deuxième fluide de refroidissement étant alimenté par l'intermédiaire d'au moins un deuxième canal d'entrée de fluide (31), ledit au moins un deuxième canal d'entrée de fluide (31) étant au moins partiellement formé à travers la nervure (28) du palier avant (14).

2. Moteur (10) selon la revendication 1, **caractérisé en ce que** le deuxième fluide de refroidissement sort de la cavité interne par l'intermédiaire d'au moins un deuxième canal de sortie de fluide (35), ledit au moins un deuxième canal de sortie de fluide (35) étant au moins partiellement formé par une rainure axiale (36) s'étendant le long d'une face interne (145) du palier avant (14) jouxtant le stator (13), ladite rainure axiale (36) communiquant fluidiquement avec un orifice de sortie (37) formé à travers le palier arrière (15).

3. Moteur (10) selon la revendication 2, **caractérisé en ce que** l'orifice de sortie (37) est formé axialement à travers une paroi d'extrémité (151) du palier arrière (15).

4. Moteur (10) selon l'une des revendications précédentes, **caractérisé en ce que** ledit au moins un deuxième canal d'entrée de fluide (31) est en communication fluidique avec au moins un canal de circulation de fluide (34) formé à l'intérieur du stator (13), ledit au moins un canal de circulation de fluide (34) débouchant à l'une (341) de ses extrémités dans un espace intermédiaire avant séparant axialement la paroi d'extrémité (141) du palier avant (14) du stator (13) et à une autre (342) de ses extrémités dans un espace intermédiaire arrière séparant axialement une paroi d'extrémité (151) du palier arrière (15) du stator (13).

5. Moteur (10) selon l'une des revendications précédentes, **caractérisé en ce que** le palier arrière (15) est équipé d'une tubulure d'entrée de fluide (22) communiquant avec le premier canal d'entrée de fluide (26) et d'une tubulure de sortie de fluide (23) communiquant avec le premier canal de sortie de fluide (27).

6. Moteur (10) selon l'une des revendications précédentes, **caractérisé en ce que** le palier avant (14) est équipé d'au moins une tubulure d'entrée de fluide (32) communiquant avec ledit au moins un deuxième canal d'entrée de fluide (31).

7. Moteur (10) selon l'une des revendications précédentes, **caractérisé en ce que** des joints d'étanchéité (8) annulaires sont logés au moins partiellement à l'intérieur de rainures annulaires (7) formées à la périphérie externe de la partie cylindrique (142) du palier avant (14), de part et d'autre du canal interne (9) de circulation de fluide.

8. Moteur (10) selon l'une des revendications précédentes, **caractérisé en ce que** le premier fluide de refroidissement est choisi parmi l'air, l'eau glycolée ou une huile.

9. Moteur (10) selon l'une des revendications précédentes, **caractérisé en ce que** le deuxième fluide de refroidissement est choisi parmi l'air ou une huile.

## Patentansprüche

1. Elektromotor (10), einen Rotor (11) umfassend, der auf einer Welle (12) montiert ist, und einen Stator (13), der um den Rotor (11) angeordnet ist, wobei der Stator (13) einen Körper umfasst, der aus einem Blechpaket (2) gebildet ist und Wickelköpfen (19), die axial zu beiden Seiten des Statorkörpers hervorstehen, wobei ein vorderes Lager (14) und ein hinteres Lager (15) miteinander verbunden sind, wobei die vorderen und hinteren Lager (14, 15) einen inneren Hohlraum bilden, in dem der Rotor (11) und der Stator (13) untergebracht sind, wobei das hintere Lager (15) glockenförmig ist und einen zylindrischen Teil (142) des vorderen Lagers (14) bedeckt, und sich axial von einer Endwand (141) des vorderen Lagers (14) erstreckt, wobei das hintere Lager (15) mit dem vorderen Lager (14) einen inneren Kanal (9) zum Zirkulieren eines ersten Kühlfluids bildet, und in dessen Innern ein erstes Kühlfluid zirkuliert, wobei das erste Kühlfluid ins Innere des inneren Kanal (9) über einen ersten Fluideinlasskanal (26) eintritt, der radial durch das hintere Lager (15) hindurch gebildet wird, und den inneren Kanal (9) über einen ersten Fluidauslasskanal (27) verlässt, der radial durch das hintere Lager (15) hindurch gebildet wird, **dadurch gekennzeichnet, dass** das vordere Lager (14) eine hervorstehende Rippe (28) aufweist, die sich radial in Richtung einer Innenseite (152) des hinteren Lagers (15) erstreckt, wobei die Rippe (28) einen Trenner für den inneren Kanal (9) bildet, und die ersten Fluideinlass- und -auslasskanäle (26, 27) jeweils zu beiden Seiten der Rippe (28) ausmünden, und dass der Elektromotor (10) zusätzlich durch ein zweites Kühlfluid gekühlt wird, das im Blechpaket (2) des Stators (13) und auf den Wickelköpfen (19) des Stators (13) zirkuliert, wobei das zweite Kühlfluid über mindestens einen zweiten Fluideinlasskanal (31) zugeführt wird, wobei der mindestens eine zweite Fluideinlasskanal (31) mindestens teilweise durch die Rippe (28) des vorderen Lagers (14) hindurch gebildet ist.

2. Motor (10) nach Anspruch 1, **dadurch gekennzeichnet, dass** das zweite Kühlfluid über mindestens einen zweiten Fluidauslasskanal (35) aus dem inneren Hohlraum austritt, wobei der mindestens eine zweite Fluidauslasskanal (35) mindestens teilweise durch eine axiale Nut (36) gebildet ist, die sich entlang einer Innenseite (145) des an den Stator (13) angrenzenden vorderen Lagers (14) erstreckt, wobei die axiale Nut (36) fluidisch mit einer Auslassöffnung (37) in Verbindung steht, die durch das hintere Lager (15) hindurch gebildet ist.

3. Motor (10) nach Anspruch 2, **dadurch gekennzeichnet, dass** die Auslassöffnung (37) axial durch eine Endwand (151) des hinteren Lagers (15) hindurch gebildet ist.

4. Motor (10) nach einem der vorhergehenden Ansprüche, **dadurch gekennzeichnet, dass** der mindestens eine zweite Fluideinlasskanal (31) mit mindestens einem Fluidzirkulationskanal (34), der im Innern des Stators (13) gebildet ist, fluidisch in Verbindung steht, wobei mindestens ein Fluidzirkulationskanal (34) an einem (341) seiner Enden in einen vorderen Zwischenraum ausmündet, der die Endwand (141) des vorderen Lagers (14) vom Stator (13) axial trennt, und an einem anderen (342) seiner Enden in einen hinteren Zwischenraum, der axial eine Endwand (151) des hinteren Lagers (15) vom Stator (13) trennt.

5. Motor (10) nach einem der vorhergehenden Ansprüche, **dadurch gekennzeichnet, dass** das hintere Lager (15) mit einem Fluideinlassstutzen (22) ausgestattet ist, der mit dem ersten Fluideinlasskanal (26) in Verbindung steht, und mit einem Fluidauslassstutzen (23), der mit dem ersten Fluidauslasskanal (27) in Verbindung steht.

6. Motor (10) nach einem der vorhergehenden Ansprüche, **dadurch gekennzeichnet, dass** das vordere Lager (14) mit mindestens einem Fluideinlassstutzen (32) ausgestattet ist, der mit dem mindestens einen zweiten Fluideinlasskanal (31) in Verbindung steht.

7. Motor (10) nach einem der vorhergehenden Ansprüche, **dadurch gekennzeichnet, dass** ringförmige Dichtungen (8) mindestens teilweise im Innern der ringförmigen Nuten (7) untergebracht sind, die am äußeren Umfang des zylindrischen Teils (142) des vorderen Lagers (14) auf beiden Seiten des inneren Fluidzirkulationskanals (9) gebildet sind.

8. Motor (10) nach einem der vorhergehenden Ansprüche, **dadurch gekennzeichnet, dass** das erste Kühlfluid aus Luft, Wasser-Glykol-Gemisch oder einem Öl ausgewählt wird.

9. Motor (10) nach einem der vorhergehenden Ansprüche, **dadurch gekennzeichnet, dass** das zweite Kühlfluid aus Luft oder einem Öl ausgewählt wird.

## Claims

1. An electric motor (10) comprising a rotor (11) mounted on a shaft (12), a stator (13) disposed around the rotor (11), said stator (13) comprising a body formed by a lamination stack (2) and winding heads (19) projecting axially on either side of the body of the stator, a front bearing (14) and a rear bearing (15) connected to each other, said front and rear bearings (14, 15) forming an inner cavity in which the rotor (11) and the stator (13) are housed, in which the rear bearing (15) is bell-shaped and covers a cylindrical part (142) of the front bearing (14) extending axially from an end wall (141) of said front bearing (14), the rear bearing (15) forming with the front bearing (14) an inner channel (9) for the circulation of a first cooling fluid inside which a first cooling fluid circulates, said first cooling fluid penetrating inside the inner channel (9) via a first fluid inlet channel (26) formed radially through the rear bearing (15) and exiting the inner channel (9) via a first fluid outlet channel (27) formed radially through the rear bearing (15), **characterized in that** the front bearing (14) has a projecting rib (28) extending radially towards an inner face (152) of the rear bearing (15), said rib (28) forming a separator for the inner channel (9), said first fluid inlet and outlet channels (26, 27) emerging respectively on either side of said rib (28), and **in that** the electric motor (10) is also cooled by a second cooling fluid circulating in the lamination stack (2) of the stator (13) and on the winding heads (19) of the stator (13), said second cooling fluid being supplied through at least one second fluid inlet channel (31), said at least one second fluid inlet channel (31) being at least partially formed through the rib (28) of the front bearing (14).

2. The motor (10) according to claim 1, **characterized in that** the second cooling fluid leaves the inner cavity via at least one second fluid outlet channel (35), said at least one second fluid outlet channel (35) being at least partially formed by an axial groove (36) extending along an inner face (145) of the front bearing (14) adjoining the stator (13), said axial groove (36) fluidly communicating with an outlet orifice (37) formed through the rear bearing (15).

3. The motor (10) according to claim 2, **characterized in that** the outlet orifice (37) is formed axially through an end wall (151) of the rear bearing (15).

4. The motor (10) according to any of the preceding claims, **characterized in that** said at least one second fluid inlet channel (31) is in fluid communication with at least one fluid circulation channel (34) formed inside the stator (13), said at least one fluid circulation channel (34) emerging at one (341) of its ends into a front intermediate space axially separating the end wall (141) from the front bearing (14) of the stator (13) and at another (342) of its ends in a rear intermediate space axially separating an end wall (151) of the rear bearing (15) from the stator (13).

5. The motor (10) according to any of the preceding claims, **characterized in that** the rear bearing (15) is equipped with a fluid inlet pipe (22) communicating with the first fluid inlet channel (26) and a fluid outlet pipe (23) communicating with the first fluid outlet channel (27).

6. The motor (10) according to any of the preceding claims, **characterized in that** the front bearing (14) is equipped with at least one fluid inlet pipe (32) communicating with said at least one second fluid inlet channel (31).

7. The motor (10) according to any of the preceding claims, **characterized in that** the annular seals (8) are housed at least partially inside annular grooves (7) formed at the outer periphery of the cylindrical part (142) of the front bearing (14), on either side of the inner fluid circulation channel (9).

8. The motor (10) according to any of the preceding claims, **characterized in that** the first cooling fluid is selected from air, glycol water or an oil.

9. The motor (10) according to any of the preceding claims, **characterized in that** the second cooling fluid is selected from air or an oil.
